Europäisches Patentamt

European Patent Office

Office européen des brevets

(19)

(11) Numéro de publication : **0 356 281 B1**

(12) **FASCICULE DE BREVET EUROPEEN**

(45) Date de publication du fascicule du brevet :
16.12.92 Bulletin 92/51

(51) Int. Cl.⁵ : **B23B 31/20**

(21) Numéro de dépôt : **89402152.6**

(22) Date de dépôt : **28.07.89**

(54) **Pince adaptable à une machine-outil comportant un mandrin de préhension.**

(30) Priorité : **03.08.88 FR 8810517**

(43) Date de publication de la demande :
**28.02.90 Bulletin 90/09**

(45) Mention de la délivrance du brevet :
**16.12.92 Bulletin 92/51**

(84) Etats contractants désignés :
**DE ES FR GB IT**

(56) Documents cités :
**DE-A- 3 127 486**
**FR-A- 1 159 982**
**US-A- 1 981 660**
**US-A- 2 456 776**

(73) Titulaire : **S.A. SREBOT**
**Z.I. La Marinière 7, rue Gustave Eifel**
**Bondoufle**
**F-91032 Evry Cédex (FR)**

(72) Inventeur : **Srebot, Robert**
**61, rue du Clos**
**F-91130 Ris-Orangis (FR)**
Inventeur : **Berthoud, Bernard**
**8, allée des Pommiers**
**F-77130 Ponthierry (FR)**

(74) Mandataire : **Hoisnard, Jean-Claude et al**
**Cabinet Beau de Loménie 55, rue**
**d'Amsterdam**
**F-75008 Paris (FR)**

# Description

Les machines de production modernes très performantes sont loin d'être exploitées au maximum de leurs capacités. Cette constatation prend toute son ampleur plus particulièrement dans des domaines tels que l'industrie aéronautique, les machines spéciales, les fabrications en petites séries, etc.

Par ailleurs, les impératifs économiques imposent, d'une part, des stocks petits de produits finis, d'autre part, une réaction rapide aux besoins du marché.

Pour aboutir à une gestion optimale des délais de fabrication, il faut réduire au maximum les temps morts entre chaque opération d'usinage, ainsi que les temps de préparation de la machine pour passer d'un type de pièce à usiner à un autre.

Une importante partie de ce temps est consacrée à une opération "délicate" qui conditionne toute la suite de la fabrication ; il s'agit de la mise en place des pièces sur la machine et de leur bonne fixation.

L'invention est ainsi relative à une pince adaptable sur une machine-outil, dont la constitution est définie par le préambule de la revendication 1. US-A-1,981,660 représente une telle pince.

Selon l'invention, cette pince comprend les dispositions définies dans la partie caractérisante de la revendication 1.

Les avantageuses dispositions suivantes sont, en outre, de préférence adoptées :

- la pince comporte une butée qui est fixée sur la face avant du bâti en une position réglable et qui est munie d'une face transversale de limitation du déplacement axial vers l'avant de la pièce principale de coulissement ;
- la pince proprement dite comporte un évidement axial, cependant qu'un arrêtoir de réglage de la position d'une pièce à usiner est vissé sur le bâti et fait saillie à l'intérieur dudit évidement central, de manière à permettre l'appui de ladite pièce à usiner au moment de son montage sur la pince ;
- la face tronconique solidaire de la pièce principale de coulissement avec laquelle coopère la face tronconique de chaque branche de la pince proprement dite est constituée par le nez de forme tronconique d'une pièce rapportée, qui est fixée sur la pièce principale de coulissement au moyen d'un taraudage que comporte l'alésage de ladite pièce principale de coulissement coopérant avec un filetage dont est munie ladite pièce rapportée, ledit nez tronconique coopérant avec la face tronconique de commande du déplacement radial de chaque branche de la pince proprement dite ;
- la face tronconique solidaire de la pièce principale de coulissement avec laquelle coopère la face tronconique de chaque branche de la pince proprement dite est constituée par l'extrémité avant de la pièce principale de coulissement qui (l'extrémité avant) est tronconique d'axe confondu avec l'axe de symétrie de l'alésage du bâti.

Les avantages de l'invention sont nombreux et il est bon de noter les suivants :

- montage possible, sur un mandrin existant non modifié, d'une pince spécialement adaptée à un travail déterminé ;
- obtention d'une très bonne précision du maintien en position des pièces à usiner, car les branches de la pince ne sont mobiles que radialement ;
- facilité du montage obtenue par la butée interne à l'un des types de pince proposée ;
- protection des pièces à usiner, notamment des pièces fragiles, grâce à la limitation de la commande du serrage de la pince proposée ;
- changement aisé de pinces, grâce au dispositif particulier prévu pour leur montage.

L'invention sera mieux comprise, et des caractéristiques secondaires et leurs avantages apparaîtront au cours de la description de réalisations donnée ci-dessous à titre d'exemple.

Il est entendu que la description et les dessins ne sont donnés qu'à titre indicatif et non limitatif.

Il sera fait référence aux dessins annexés, dans lesquels :

- la figure 1 est une vue de face du mors de préhension existant d'une machine-outil, telle qu'un tour ;
- la figure 2 est une coupe axiale simplifiée du mors de préhension de la figure 1, suivant II-II de cette figure 1 ;
- la figure 3 est une coupe axiale d'une pince complète conforme à une première variante de réalisation conforme à l'invention ;
- la figure 4 est une vue suivant flèche F de la figure 3 ;
- la figure 5 est une vue suivant flèche G de la figure 3 ;
- la figure 6 est une coupe axiale, analogue à celle de la figure 3, d'une pince complète conforme à une deuxième variante de réalisation conforme à l'invention.

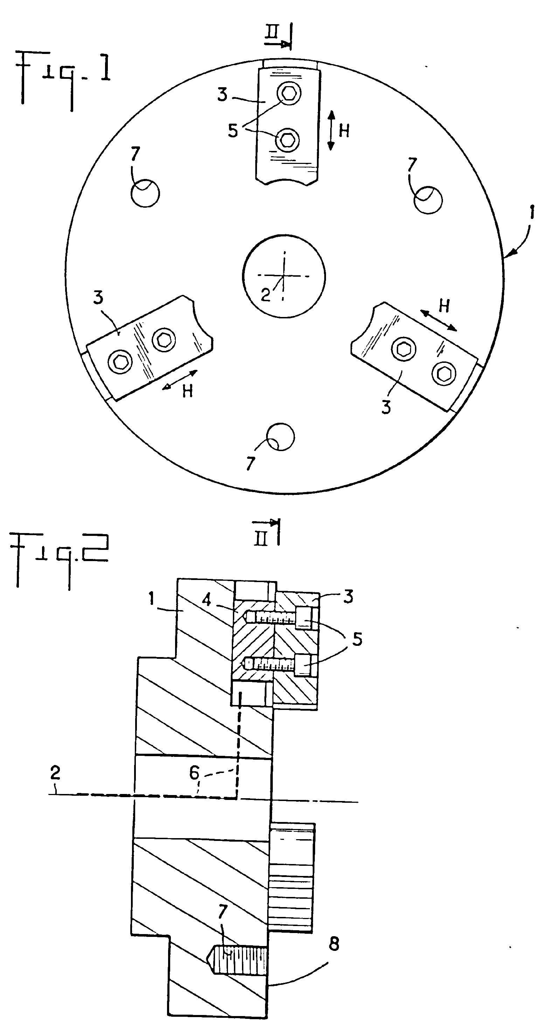

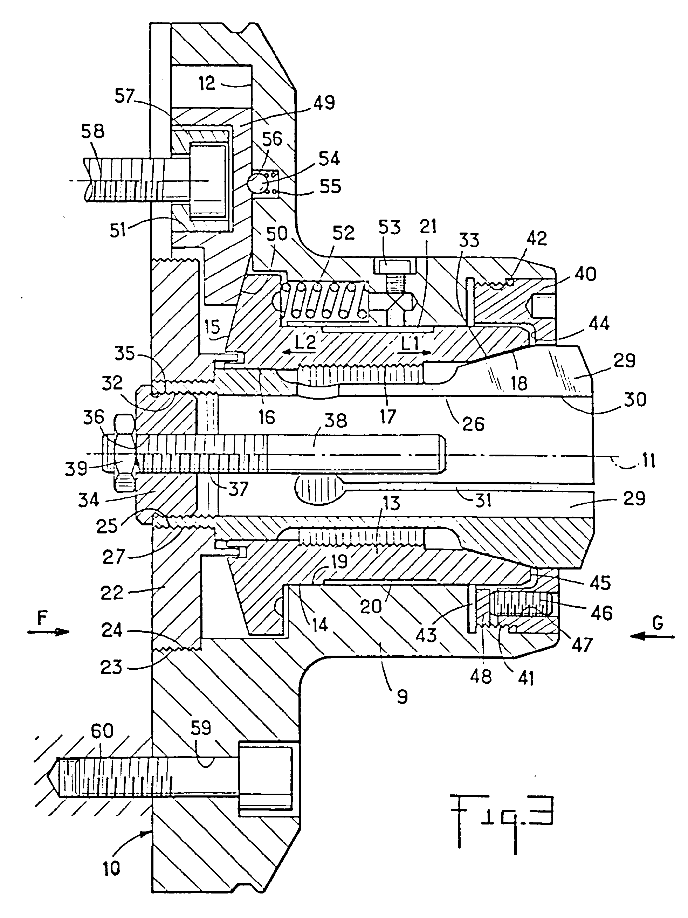

Les figures 1 et 2 représentent le mandrin existant d'une machine-outil, constituée par un tour. Ce mandrin 1 est monté sur le bâti de la machine-outil, à rotation autour de l'axe géométrique 2, et de manière à pouvoir être entraîné en rotation par un moteur de cette machine-outil. Le mandrin 1 comporte trois mors 3 qui sont fixés, chacun, sur un plot 4 de réglage de sa position, lesdits plots 4 pouvant se déplacer dans des rainures du mandrin 1 suivant des directions radiales (flèches H de la figure 1). Les fixations des mors sont assurées de manière amovible par des vis 5, de sorte que lesdits mors 3 peuvent être séparés du mandrin 1. Par ailleurs, un dispositif de commande 6, schématisé par une liaison représentée en traits interrompus, est relié aux plots 4 et permet leur déplacement. Enfin, des alésages taraudés 7, débouchant dans la face avant 8 du mandrin, permettent la fixation sur celui-ci de toute pièce complémentaire.

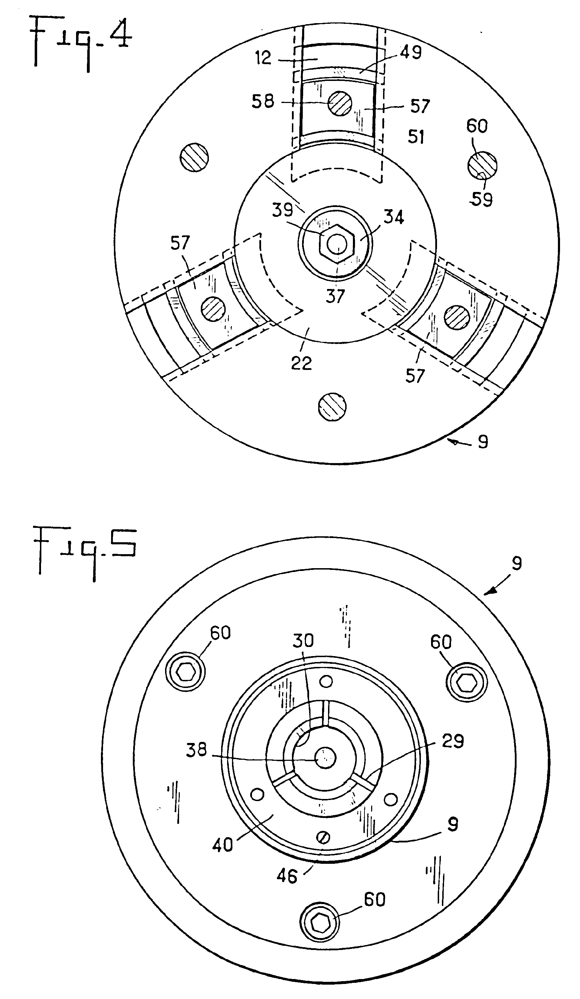

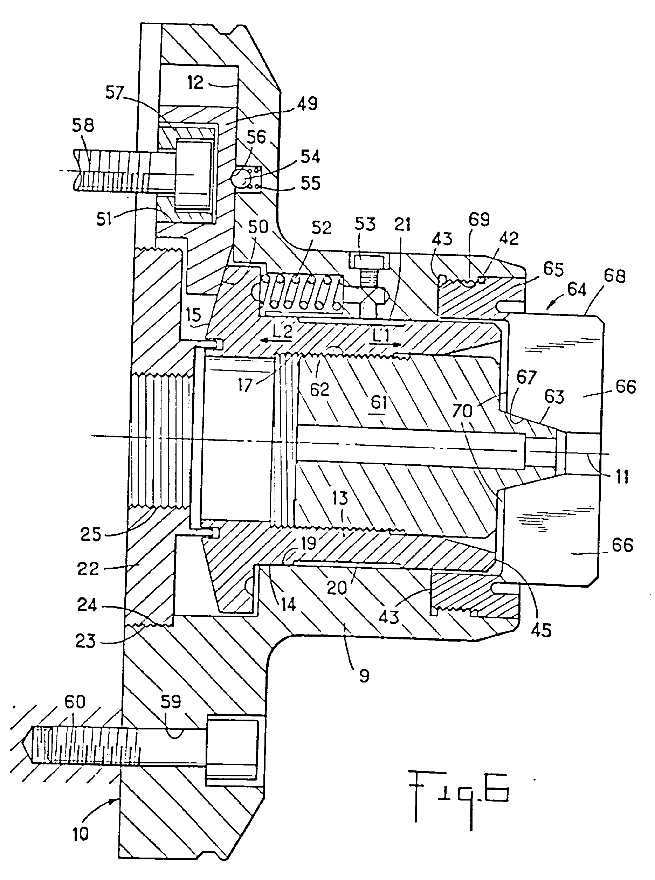

La pince complète représentée en regard des figures 3 à 5 comprend :

- un bâti 9 comportant une face arrière 10 susceptible d'être appliquée sur la face avant 8 du mandrin 1, un alésage 19, ayant un axe de symétrie 11, et des rainures 12 qui ont une section transversale en T et débouchent dans la face arrière 10 ;

- une pièce principale de coulissement 13, qui comporte une face cylindrique externe 14 montée coulissante dans l'alésage 19 du bâti 9, une face arrière tronconique 15 d'axe confondu avec l'axe 11 de l'alésage 19 du bâti, un alésage 16 cylindrique, un filetage intérieur 17 disposé dans le prolongement de l'alésage 16, et une face avant interne 18, également tronconique et d'axe confondu avec l'axe 11 de l'alésage 19 du bâti, une gorge 20 étant ménagée dans la partie centrale de la face cylindrique externe 14 pour, en coopération avec l'alésage 19 du bâti, constituer une chambre 21 de graissage ;

- un fond arrière 22, qui comporte un filetage externe 23 vissé dans un taraudage 24 dont est muni le bâti 9 et qui débouche dans la face arrière 10 de ce bâti, ledit fond présentant lui-même un alésage taraudé 25 ;

- la pince proprement dite 26, qui comporte une partie arrière annulaire, s'étendant approximativement sur le tiers arrière de la longueur totale de cette pièce et munie d'une partie cylindrique externe filetée 27, vissée dans l'alésage taraudé 25 du fond arrière 22, et trois branches 29, rattachées à cette partie arrière, séparées les unes des autres par des espaces 31 et destinées à la préhension d'une pièce à usiner, cette pince proprement dite 26 ayant un évidement axial défini, vers l'avant, par des faces cylindriques internes 30 des branches 29, un taraudage arrière 32 et des faces avant tronconiques 33 des branches 29, d'axe confondu avec l'axe 11 et correspondant à la face tronconique avant 18 de la pièce principale de coulissement 13 ;

- une pièce d'obturation 34 qui comporte un filetage externe 35 en permettant la fixation par vissage dans le taraudage 32, ainsi qu'un orifice central taraudé 36 qui permet la fixation de la partie externe filetée 37 d'une butée 38 qui s'étend à l'intérieur de l'évidement axial de la pince proprement dite 26, un écrou 39 coopérant avec la partie filetée 37 pour assurer le blocage de la butée 38 par rapport à la pièce d'obturation 34 ;

- une pièce 40, qui comporte une partie externe filetée 41 vissée dans un alésage taraudé 42 d'un évidement 43 de la partie avant du bâti 9 et un épaulement 44 de limitation du déplacement de coulissement de la face transversale avant 45 de la pièce principale de coulissement 13, une vis 46, contenue dans un taraudage 47 de cette pièce 40, étant susceptible de venir en appui sur le fond 48 du taraudage 47, dont la périphérie constitue un élément de la partie filetée 11, et ainsi de bloquer en position la pièce 40 dans l'évidement 43 ;

- trois coulisseaux 49 engagés, chacun, dans une des glissières 12, munis d'une rampe inclinée 50, qui correspond et coopère avec la face arrière tronconique 15 de la pièce principale de coulissement 13 et comportant chacun un logement borgne 51 qui débouche dans la face arrière 10 du bâti 9 ;

- des ressorts 52 qui sont disposés entre le bâti 9 et la pièce principale de coulissement 13 et ont pour effet de rappeler ladite pièce principale de coulissement vers l'arrière (vers la face arrière 10 du bâti) ;

- un graisseur 53 et ses conduits pour l'approvisionnement en graisse de la chambre 21 et de la ou des chambres qui reçoivent les ressorts 52 ;

- des billes 54 poussées par de petits ressorts 55 vers des empreintes 56 ménagées dans les coulisseaux 49 ;

- trois mors d'adaptation 57 qui sont susceptibles d'être contenus chacun dans le logement 51 d'un coulisseau 49, et d'être fixés, par des vis 58, sur le mandrin 1 à la place des mors classiques 3, les vis 58 remplaçant, chacune, une vis 5 ;

- trois trous traversants épaulés 59, ménagés dans le bâti 9, qui sont aptes à recevoir des vis 60 (l'une d'elles est représentée sur la figure 3) de fixation du bâti 9 sur le mandrin 1, les mors classiques 3 ayant au préalable été enlevés et remplacés par des mors d'adaptation 57.

La réalisation de la figure 6 comporte tous les constituants de la réalisation de la figure 5 sauf la pince proprement dite 26, la pièce 40, la butée 38 et son support 34. Une pièce complémentaire 61 comporte une face extérieure filetée 62, qui est vissée dans le filetage intérieur 17 de la pièce principale de coulissement 13, et un nez avant tronconique 63, d'axe confondu avec l'axe 11 du bâti 9. La pince proprement dite 64 comprend un corps arrière 65 muni d'une face cylindrique externe filetée 69, qui en permet la fixation dans l'alésage taraudé 42 de l'évidement 43 et quatre branches 66, qui sont séparées les unes des autres par des espaces et comportent des portions de faces tronconiques 67 qui correspondent à, et coopèrent, avec la face tronconique du nez 63 de la pièce complémentaire 61. Les faces périphériques externes 68 d'extrémité des branches 66 constituent les faces de préhension de la pince proprement dite. Enfin, les branches 66 de la pince proprement dite sont munies, vers l'arrière, d'épaulements 70 sur lesquels la face avant 45 de la pièce principale de coulissement est susceptible de venir en butée.

Lorsque la pince de la figure 3 est fixée sur le mandrin 1 par les vis 60, les mors d'adaptation 57 ayant été introduits par simple enfoncement dans les logements 5l des coulisseaux 49, le fonctionnement obtenu est le suivant : au moyen du dispositif de commande 6, les coulisseaux 49 sont déplacés radialement dans les glissières 12, par exemple vers l'axe 11. Les rampes 50 des coulisseaux 49 exercent une poussée sur la face tronconique 15 de la pièce principale de coulissement 13, qui a pour effet de déplacer cette pièce 13 vers l'avant, dans le sens de la flèche L1. La pince proprement dite 26 est immobilisée axialement par rapport au bâti 9, puisque vissée (27-25) sur le fond 22, lui-même vissé (23-24) sur le bâti 9. Par contre, l'appui de la face tronconique 18 de la pièce principale de coulissement 13 sur les faces tronconiques 33 des branches 29 déplace les faces cylindriques de préhension 30 de ces branches dans le sens radial, ce qui provoque la préhension désirée d'une pièce à usiner.

Si la pièce à usiner est fragile, et qu'il est de ce fait nécessaire d'éviter son écrasement local par les faces de préhension 30, il suffit de visser la pièce 40 dans l'évidement 43 du bâti 9 pour interdire tout déplacement supplémentaire de la pièce principale de coulissement 13 après la mise en appui de sa face transversale avant 45 sur l'épaulement 44 de la pièce 40, limitant par ce moyen le déplacement radial des faces de préhension 30 des branches 29.

Le déplacement des coulisseaux 49 les éloignant de l'axe 11 permet à l'action des ressorts 52 de rappeler en arrière, dans le sens de la flèche L2, la pièce principale de coulissement 13 et aux branches 29 de s'écarter de l'axe 11, sous l'effet de leur élasticité propre, faisant ainsi cesser la préhension de la pièce à usiner.

L'immobilisation axiale de la pince proprement dite rend par ailleurs possible l'obtention d'une grande précision de la préhension, par les branches 29, d'une pièce à usiner.

La butée 38 permet une grande facilité de mise en place d'une pièce à usiner.

A noter encore :

- la mise en place très simple, au moyen de trois vis 60, de la pince spéciale pour chaque type de pièces à usiner ;

- l'adaptation aisée de la pince à chaque type de pièce à usiner par modification de la forme de la pince proprement dite 26, ou remplacement de la butée 38 par une autre butée adaptée à la nouvelle pièce à usiner ;

- l'absence d'intervention sur le mandrin principal 1, dont seulement les mors classiques 3 ont été retirés, par simple dévissage (5) et ont été remplacés par les mors d'adaptation 57.

Il est enfin possible d'usiner des pièces devant être saisies par l'intérieur d'un évidement, en adoptant la pince de la figure 6 dont les branches 66 peuvent s'écarter (s'éloigner de l'axe 11) et venir en contact dudit évidement de la pièce à usiner par leurs faces externes 68.

Là encore, la mise en appui de la face transversale avant 45 de la pièce de coulissement 13 sur les épaulements 70 permet de limiter l'écartement des branches 66 et ainsi de saisir des pièces fragiles sans les détériorer.

**Revendications**

1. Pince adaptable sur une machine-outil, qui comporte un mandrin de préhension (1) d'une pièce à usiner comprenant une face avant (8), au moins deux mâchoires de préhension (3) fixées (5) de manière amovible sur des organes de réglage de leur position (4) et un dispositif de commande (6) desdits organes de réglage de position,

cette pince adaptable comprenant :

- un bâti (9) comportant une face arrière (10), susceptible d'être fixé par cette face arrière sur ladite face avant (8) du mandrin de préhension (1) et comportant, d'une part, un alésage central (19) possédant (l'alésage) un axe de symétrie (11), d'autre part, des rainures radiales (12) débouchant dans sa face arrière (10) :

- une pièce principale de coulissement (13) munie d'une face cylindrique (14) correspondant à l'alésage (19) du bâti (9), montée coulissante par rapport audit alésage, et en outre munie d'une face arrière tronconique (15) dont l'axe est confondu avec l'axe de symétrie (11) de l'alésage du bâti ;

- la pince proprement dite (26), dont la partie avant comprend plusieurs branches (29) qui sont réparties régulièrement autour de l'axe de symétrie (11) de l'alésage du bâti, chacune de ces branches (29) comprenant une face axiale de préhension (30) d'une pièce à usiner et une face tronconique (33) de commande du déplacement radial de ladite branche, qui coopère avec une face tronconique (18) solidaire de la pièce principale de coulissement (13), de manière à faire correspondre, à un déplacement axial de ladite pièce principale de coulissement (13), un déplacement radial de ladite branche (29) de la pince proprement dite (26) ;

- des coulisseaux (49), qui sont montés coulissants dans les rainures (12) du bâti (9), et qui comportent, chacun, une face tronconique (50) correspondant à, et coopérant avec, la face arrière tronconique (15) de la pièce principale de coulissement (13) ; et

- un organe de rappel élastique (52) dont l'effet est de rappeler ladite pièce principale de coulissement vers la face arrière du bâti (L2) et est antagoniste de celui (L1) de l'appui des faces tronconiques (50) des coulisseaux (49) sur la face tronconique arrière (15) de la pièce principale de coulissement (13) ; caractérisé en ce que :

a) la partie arrière de la pince proprement dite est fixée (25-27) sur le bâti (9-22) ;

b) les coulisseaux (49) comportent un logement (51) débouchant dans la face arrière du coulisseau correspondant, et sont susceptibles d'être rendus solidaires (57-58) des organes de réglage (4) de la position des mâchoires de préhension du mandrin (1) de la machine-outil ;

c) des mors d'adaptation (57) sont disposés et susceptibles d'être fixés de manière amovible (58) sur les organes de réglage (4) des mâchoires de préhension du mandrin (1) de la machine-outil à la place desdites mâchoires et de pénétrer dans lesdits logements (51) des coulisseaux (49) ;

d) l'organe de rappel (52) est disposé entre le bâti (9) et la pièce principale de coulissement (13) ; et

e) la pièce principale de coulissement (13) est munie d'un alésage partiellement cylindrique (16).

2. Pince selon la revendication 1, caractérisée en ce qu'elle comporte une butée (40) qui est fixée (41-42) sur la face avant du bâti en une position réglable et qui est munie d'une face transversale (44) de limitation du déplacement axial vers l'avant (L1) de la pièce principale de coulissement (13).

3. Pince selon l'une quelconque des revendications 1 et 2, caractérisée en ce que la pince proprement dite (26) comporte un évidement axial, cependant qu'un arrêtoir (38) de réglage de la position d'une pièce à usiner est vissé (37-36) sur le bâti (9-22-34) et fait saillie à l'intérieur dudit évidement central, de manière à permettre l'appui de ladite pièce à usiner au moment de son montage sur la pince.

4. Pince selon l'une quelconque des revendications 1 à 3, caractérisée en ce que la face tronconique solidaire de la pièce principale de coulissement avec laquelle coopère la face tronconique de chaque branche de la pince proprement dite est constituée par le nez (63) de forme tronconique d'une pièce rapportée (61), qui est fixée (62-17) sur la pièce principale de coulissement (13) au moyen d'un taraudage (17) que comporte l'alésage de ladite pièce principale de coulissement coopérant avec un filetage (62) dont est munie ladite pièce rapportée (61), ledit nez tronconique coopérant avec la face tronconique (63) de commande du déplacement radial de chaque branche (66) de la pince proprement dite (64).

5. Pince selon l'une quelconque des revendications 1 à 3, caractérisée en ce que la face tronconique solidaire de la pièce principale de coulissement avec laquelle coopère la face tronconique de chaque branche de la pince proprement dite est constituée par l'extrémité avant (18) de la pièce principale de coulissement (13) qui (l'extrémité avant) est tronconique d'axe confondu avec l'axe (11) de symétrie de l'alésage du bâti.

## Claims

1. Collet adaptable to a machine tool that includes a chuck (1) for clasping a workpiece to be machined, said chuck comprising a front face (8), at least two clasping jaws (3) movably affixed (5) to the jaw position adjustment means (4), and a control device (6) for said position adjustment means, said adaptable collet having :

- a frame (9) having a rear face (10) capable of being affixed by said rear face to said front face (8) of the chuck (1) and having, on the one hand, a central bore (19), which bore possesses a symmetry axis (11) and, on the other, radial grooves (12) opening onto its rear face (10) ;

- a main sliding element (13) fitted with a cylindrical face (14) corresponding to the bore (19) of the frame (9), slidably mounted with respect to said bore and further equipped with a frustoconical rear face (15) whose axis coincides with the symmetry axis (11) of the frame's bore ;

- the collet per se (26) whose front portion includes several stems (29) that are uniformly distributed around the symmetry axis (11) of the frame's bore, each of said stems (29) having an axial face for clasping (30) a workpiece to be machined and a frustoconical face (33) for controlling the radial displacement of said stem, which cooperates with a frustoconical face (18) that is unitary with the main sliding element (13) so as to make an axial displacement of said main sliding element (13) correspond to a radial displacement of said stem (29) of the collet per se (26) ;

- slides (49) that are slidably mounted in the grooves (12) of the frame (9), each of said slides including a frustoconical face (50) corresponding to, and cooperating with, the rear frustoconical face (15) of the main sliding element (13) ; and

- a resilient biasing member (52) serving to press said main sliding element towards the rear face of the frame (L2) and which counters the pressing effect (L1) of the frustoconical faces (50) of the slides (49) on the rear frustoconical face (15) of the main sliding element (13) ;

characterized in that :

a) the rear part of the collet per se is fixed (25-27) to the frame (9-22) ;

b) the slides (49) have a bore (51) opening onto the rear face of the corresponding slide, and which slides are capable of being joined (57-58) to the jaw position adjustment means (4) of the machine tool chuck (1) ;

c) adapting jaws (57) that are placed and capable of being removably mounted (58) on the jaw adjustment means (4) of the machine tool chuck (1) in place of said jaws, and which can penetrate inside said bores (51) of the slides (49) ;

d) the biasing means (52) is located between the frame (9) and the main sliding element (13) ; and

e) the main sliding element (13) is fitted with a partially cylindrical bore (16).

2. Collet according to claim 1, characterized in that it includes an abutment (40) that is affixed (41-42) to the front face of the frame in an adjustable position and that is fitted with a transversal face (44) for limiting axial displacement towards the front (L1) of the main sliding element (13).

3. Collet according to any one of claims 1 and 2, characterized in that the collet per se (26) has an axial hollow portion, while a ferrule (38) for position adjustment of the workpiece to be machined is screwed (37-36) on the frame (9-22-34) and protrudes inside said central hollow so as to provide a rest for said workpiece to be machined when the latter is inserted in said collet.

4. Collet according to any one of claims 1 to 3, characterized in that the frustoconical face that is unitary with the main sliding element, with which the frustoconical face of each stem of the collet per se cooperates, is formed by a frustoconical-shaped nose (63) of an inserted element (61) which is affixed (62-17) to the main sliding element (13) by means of a tapping (17) formed in the bore of said main sliding element cooperating with a threaded portion (62) adapted on the said inserted element (61), said frustoconical nose cooperating with the frustoconical face (63) for controlling the radial displacement of each stem (66) of the collet per se (64).

5. Collet according to any one of claims 1 to 3, characterized in that the frustoconical face that is unitary with the main sliding element with which the frustoconical face of each stem of the collet per se cooperates is formed by the front end (18) of the main sliding element (13), which front end is frustoconical and has an axis aligned with the symmetry axis (11) of the frame's bore.

**Patentansprüche**

1. Spannzange adaptierbar an eine Werkzeugmaschine, die ein Aufnahmefutter (1) für ein zu bearbeitendes Werkstück aufweist, mit einer Vorderseite (8), wenigstens zwei Klemmbacken (3), die auf bewegliche Weise an Einstellorganen ihrer Position (4) befestigt sind (5) und mit einer Betätigungsvorrichtung (6) der Positionseinstellorgane, wobei diese adaptierbare Spannzange aufweist:

- einen Rahmen (9), der eine Hinterseite (10) aufweist, der geeignet ist, durch diese Hinterseite auf der Vorderseite (8) des Aufnahmefutters (1) befestigt zu werden und einerseits eine zentrale Ausnehmung (19), die (die Ausnehmung) eine Symmetrieachse (11) besitzt, und andererseits radiale Kerben (12) aufweist, die in seine Rückseite (10) münden;

- ein Hauptgleitstück (13), das mit einer zylindrischen Seite (14) entsprechend der Ausnehmung (19) des Rahmens (9) versehen ist, das gleitbeweglich bezüglich der Ausnehmung angebracht ist, und weiterhin mit einer kegelstumpfförmigen Hinterseite (15) versehen ist, deren Achse mit der Symmetrieachse (11) der Ausnehmung des Rahmens zusammenfällt;

- die eigentliche Spannzange (26), deren vorderer Bereich mehrere Arme (29) aufweist, die regelmäßig um die Symmetrieachse (11) der Ausnehmung des Rahmens verteilt angeordnet sind, wobei ein jeder der Arme (29) eine axiale Aufnahmeseite (30) eines zu bearbeitenden Werkstückes und eine kegelstumpfförmige Seite (33) der Betätigung der radialen Verschiebung des Armes aufweist, die mit einer kegelstumpfförmigen Seite (18) zusammenwirkt, die mit dem Hauptgleitstück (13) verbunden ist, derart, daß sie einer axialen Verschiebung des Hauptgleitstückes (13) eine radiale Verschiebung des Armes (29) der eigentlichen Spannzange (26) entsprechen läßt;

- Gleitstücke (49), die gleitbeweglich in den Kerben (12) des Rahmens (9) angeordnet sind und die jeweils eine kegelstumpfförmige Seite oder Fläche (50) aufweisen, die der kepelstumpfförmigen Seite (15) des Hauptgleitstückes (13) entspricht und mit ihr zusammenwirkt; und

- ein elastisches Federungsorpan (52), dessen Wirkung es ist, das Hauptgleitstück zu der Hinterseite des Rahmens (L2) zurückzudrängen und gegenwirkend ist zu jener (L1) des Andruckes der kegelstumpfförmigen Seiten (50) der Gleitstücke (49) auf die kegelstumpfförmige Hinterseite (15) des Hauptgleitstückes (13);

dadurch gekennzeichnet, daß:

a) der hintere Bereich der eigentlichen Spannzange (25-27) an dem Rahmen (9-22) befestigt ist;

b) die Gleitstücke (49) eine Aufnahme (51) aufweisen, die in die Hinterseite des entsprechenden Gleitstückes münden, und geeignet sind, mit Einstellorganen (4) der position der Klemmbacken des Aufnahmefutters (1) der Werkzeugmaschine verbunden zu werden (57-58);

c) Anpassungsspannbacken (57) vorgesehen sind und in der Lage sind, auf bewegbare Weise (58) an den Einstellorganen (4) der Klemmbacken des Aufnahmefutters (1) der Werkzeugmaschine befestigt zu werden, anstatt der Klemmbacken, und in die Aufnahmen (51) der Gleitstücke (49) einzudringen;

d) das Federungsorpan (52) zwischen dem Rahmen (9) und dem Hauptgleitstück (13) angeordnet ist, und

e) das Hauptgleitstück (13) mit einer teilweise zylindrischen Ausnehmung (16) versehen ist.

2. Spannzange nach Anspruch 1, dadurch gekennzeichnet, daß sie einen Anschlag (40) aufweist, der auf der Vorderseite des Rahmens in einer einstellbaren Position befestigt ist (4142), und der mit einer Querseite (44) versehen ist zur Begrenzung der axialen Verschiebung nach vorne (L1) des Hauptpleitstückes (13).

3. Spannzange nach Anspruch 1 oder 2, dadurch gekennzeichnet, daß die eigentliche Zange (26) eine axiale Ausnehmung aufweist, während ein Anschlag (38) zum Einstellen der Position eines zu bearbeitenden Werkstückes an dem Rahmen (9-22-34) eingeschraubt ist (37-36) und im Inneren der zentralen Ausnehmung derart vorspringt, daß er die Anlage des Werkstückes im Zeitpunkt seiner Montage an der Spannzange erlaubt.

4. Spannzange nach einem der Ansprüche 1 bis 3, dadurch gekennzeichnet, daß die kegelstumpfförmige Seite, die mit dem Hauptgleitstück verbunden ist, mit dem die kegelstumpfförmige Seite eines jeden Armes der eigentlichen Spannzange zusammenwirkt, gebildet wird durch die Nase (63) von Kegelstumpfform eines Zusatzteils (61), das auf dem Hauptgleitstück (13) mittels eines Gewindes (17) befestigt ist (62-17), das die Ausnehmung des Hauptgleitstückes aufweist, das mit einem Gewinde (62), mit dem das Zusatzteil (61) versehen ist, zusammenwirkt, wobei die kegelstumpfförmige Nase mit der kegelstumpfförmigen Seite (63) mit der Betätigung der radialen Verschiebung eines jeden Armes (66) der eigentlichen Spannzange (64) zusammenwirkt.

5. Spannzange nach einem der Ansprüche 1 bis 3, dadurch gekennzeichnet, daß die kegelstumpfförmige Seite, die mit dem Hauptgleitstück verbunden ist, mit dem der kegelstumpfförmigen Seite eines jeden Armes der eigentlichen Spannzange zusammenwirkt, gebildet wird durch das Vorderende (18) des Hauptgleitstückes (13), das (das Vorderende) kegelstumpfförmig ist mit einer Achse, die mit der Symmetrieachse (11) der Ausnehmung des Rahmens zusammenfällt.

Fig. 1

Fig. 2

Fig.3

Fig.4

Fig.5

EP 0 356 281 B1

Fig.6

11